# EUROPEAN PATENT SPECIFICATION

(11) **EP 4 481 915 B1**
(45) Date of publication and mention of the grant of the patent: **15.04.2026**
(21) Application number: 24181340.1
(22) Date of filing: 11.06.2024
(51) Int. Cl.: H01M 50/204, H01M 50/249, H01M 50/30, H01M 10/625

(54) **ELECTRICITY STORAGE PACK**
STROMSPEICHERPACK
BLOC DE STOCKAGE D'ÉLECTRICITÉ

(30) Priority: 23.06.2023 JP 2023103016
(43) Date of publication of application: 25.12.2024
(73) Proprietor: Prime Planet Energy & Solutions, Inc., Tokyo 103-0022 (JP)
(72) Inventor: ITO, Tomoaki, Tokyo, 103-0022 (JP)
(74) Representative: Kuhnen & Wacker Patent- und Rechtsanwaltsbüro PartG mbB

(56) References cited:
- WO-A1-2018/043907
- JP-A- 2018 081 820
- JP-B2- 5 674 936
- US-B2- 9 450 266

## Description

### BACKGROUND OF THE DISCLOSURE

### Technical Field

The present disclosure relates to an electricity storage pack.

### DESCRIPTION OF BACKGROUND

Electricity storage packs are preferably used as power sources with high output, particularly as vehicle-mounted battery assemblies. Such an electricity storage pack includes a plurality of connected electricity storage devices and an exterior body that houses the electricity storage devices. The electricity storage devices suitable for use include lithium-ion secondary batteries, which are lightweight with high energy density, nickel-metal hydride batteries, other secondary batteries, and electricity storage elements such as capacitors. Because this type of electricity storage pack is usually mounted outside a vehicle cabin, it uses an exterior body with high rigidity that can be sealed. However, in the event of a major malfunction in the electrical storage device that leads to generation of unexpected gas, the pressure inside the exterior body may increase instantaneously, potentially causing damage to the exterior body.

WO 2020/153015 A1 discloses a battery pack that houses a plurality of battery cells. The battery pack has an expansion space therein in advance. High-temperature gas ejected from a discharge valve of each battery cell hits an impact plate section of a flame-proof cap and is attenuated by being temporarily retained in the expansion space through a diffusion gap and a reverse injection gap. Thus, the gas can be prevented from being ejected vigorously to an outside of the battery pack. Thereafter, the high-temperature gas filled in the expansion space is then dispersed through a plurality of smoke exhaust holes and discharged to an outside of the battery pack.

JP 2013-535791 A discloses a pouch battery case in which an upper battery case and a lower battery case, with corners that form spaces in a folded structure, are thermally bonded together at a sealing part. In the pouch battery case, when gas is generated inside the battery to increase an internal pressure of the battery, the folded structure is unfolded in a direction of electrodes, thus separating electrode tabs and electrode leads from an electrode assembly and cutting off a current.

An electricity storage pack as set forth in the preamble of claim 1 is known from US 9 450 266 B2, JP 2018-081820 A, JP 5674936 B2 and WO 2018/043907 A1.

### SUMMARY

However, in the technology described in WO 2020/153015 A1 above, gas generated from battery cells passes through a diffusion gap and a reverse injection gap, which are thin tubular, while hitting these gaps until the gas flow into an expansion space. Thus, a flow path resistance becomes large before the gas is discharged to an outside, and the battery pack may be damaged because the gas cannot be fully discharged through a smoke exhaust hole. In a technology described in JP 2013-535791 A above, since a folded structure (expansion part) is formed in a direction where electrode leads protrude, the pressure is concentrated in a sealing part when an internal pressure increases. Thus, a battery case may be damaged and torn in the sealing part.

Therefore, the present disclosure has an object to provide an electricity storage pack with higher safety that suppresses damage to the electricity storage pack due to an instantaneous increase in internal pressure inside the electricity storage pack.

An electricity storage pack according to claim 1 includes: a plurality of electricity storage devices electrically connected to each other; and an exterior body housing therein the plurality of electricity storage devices in a sealed state, wherein the exterior body includes an unfolding member configured to unfold when an internal pressure of the exterior body increases, thereby increasing an internal volume of the exterior body.

According to such an electricity storage pack, the unfolding member unfolds when gas is generated, leading to an increase in internal volume of the exterior body. Thus, an instantaneous increase in the internal pressure of the electricity storage pack can be temporarily suppressed. As a result, damage to the electricity storage pack can be prevented.

In the electricity storage of claim 1, the exterior body includes: a main body being a box-shaped rigid member that houses therein the electricity storage devices; and a vent provided at a bottom surface of the main body, and the unfolding member includes: a protection section being a plate-shaped rigid member facing the bottom surface of the main body; and an unfolding section being a flexible member connecting the bottom surface of the main body and a periphery of the protection section so as to seal the exterior body. Thus, the unfolding section can be protected in a state before the internal pressure of the exterior body increases.

In the electricity storage pack of another aspect disclosed herein, a peripheral wall protruding toward the bottom surface of the main body is provided at an outer peripheral edge of the protection section, and the unfolding section is housed in a space enclosed between the protection section and the bottom surface of the main body in a folded state. Thus, the unfolding section can be more suitably protected in the state before the internal pressure of the exterior body increases.

In the electricity storage pack of another aspect disclosed herein, the exterior body includes a stopper restricting unfolding of the unfolding member, and the stopper is a rod-shaped member connecting the main body and the protection section, the stopper being configured to release connection between the main body and the protection section when an internal pressure of the exterior body exceeds a predetermined value. This can made the electricity storage pack compact and can save a space when the electricity storage pack is housed in a device.

The electricity storage pack of another aspect disclosed herein includes a sensor configured to detect that the unfolding member has unfolded. Thus, the unfolding of the unfolding member, i.e., an increase in the internal pressure of the electricity storage pack, can be detected based on a detection signal of the detecting sensor.

A vehicle of another aspect disclosed herein is a vehicle on which the electricity storage pack is mounted, the electricity storage pack being mounted such that the unfolding member unfolds toward a bottom surface side of the vehicle. This can operate the unfolding member with safety, while securing a ride space.

### BRIEF DESCRIPTION OF THE DRAWINGS

FIG. 1 is a cross-sectional view schematically illustrating an internal structure of an electricity storage pack before unfolding according to one embodiment.
FIG. 2 is a cross-sectional view schematically illustrating an internal structure of the electricity storage pack after the unfolding according to the embodiment.
FIG. 3 is an enlarge diagram of a main part of the electricity storage pack before the unfolding according to the embodiment.
FIG. 4 is an enlarged diagram of the main part of the electricity storage pack after the unfolding according to the embodiment.
FIG. 5 is an enlarged diagram of a main part of an electricity storage pack before unfolding according to another embodiment.
FIG. 6 is an enlarged diagram of the main part of the electricity storage pack after the unfolding according to the other embodiment.
FIG. 7 is a diagram schematically illustrating an electric vehicle with the electricity storage pack mounted thereon under normal conditions.
FIG. 8 is a diagram schematically illustrating a state of an unfolding member after unfolding in the electric vehicle with the electricity storage pack mounted thereon.
FIG. 9 is a cross-sectional view schematically illustrating an internal structure of an electricity storage pack before unfolding according to another embodiment.
FIG. 10 is a cross-sectional view schematically illustrating an internal structure of the electricity storage pack after the unfolding according to the other embodiment.

### DETAILED DESCRIPTION

One typical embodiment in the present disclosure will be described in detail below with reference to the drawings. Matters other than those specifically mentioned herein that are necessary for implementation may be understood as matters of design by those skilled in the art based on the prior art in the field. The present disclosure can be implemented based on the contents disclosed herein and the technical common knowledge in the field. In the following drawings, members and components that have the same actions are described with the same symbols. The dimensional relationships (length, width, thickness, etc.) in each drawing do not reflect the actual dimensional relationships.

The term "electricity storage device" as used herein refers to a device that can be charged and discharged. Electricity storage devices include batteries such as secondary batteries (e.g., lithium-ion secondary batteries, nickel-metal hydride batteries), and capacitors (physical batteries) such as electric double-layer capacitors. Hereinafter, an electricity storage pack according to the present disclosure will be described in detail by using, as an example, an electricity storage pack in which a plurality of electricity storage devices is housed in a container. However, the electricity storage pack according to the present disclosure is not intended to be limited to those described in the following embodiments.

### <Electricity Storage Pack>

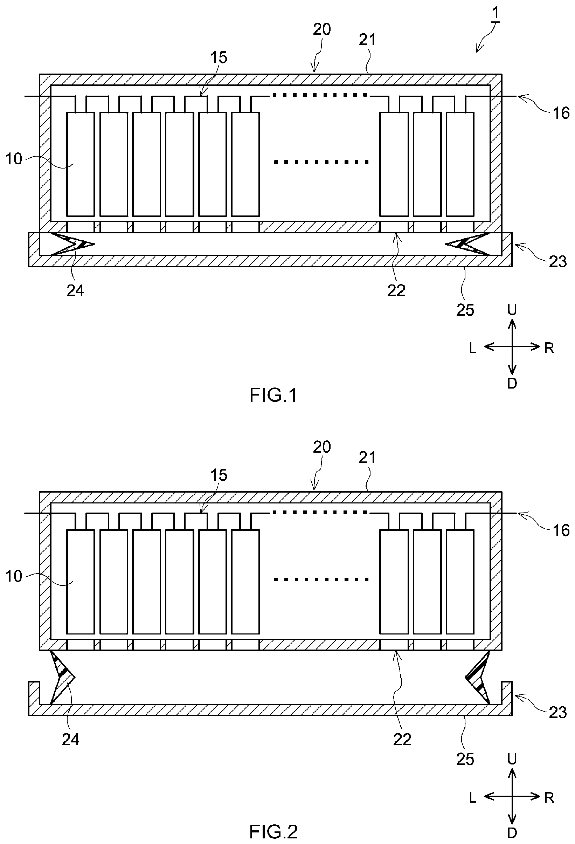

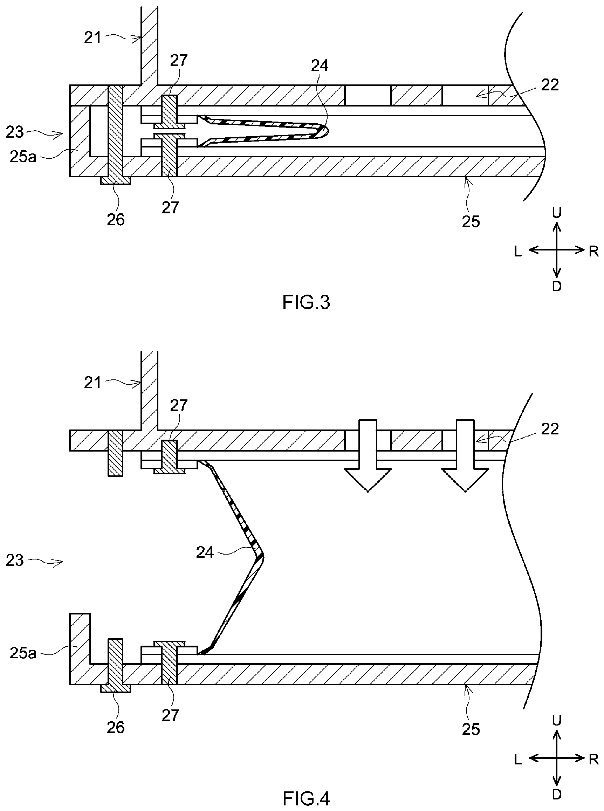

FIG. 1 is a cross-sectional view schematically illustrating an internal structure of an electricity storage pack according to a present embodiment. FIG. 2 is a cross-sectional view schematically illustrating an internal structure of the electricity storage pack after the unfolding according to the present embodiment. FIG. 3 is an enlarge diagram of a main part of the electricity storage pack before the unfolding according to the present embodiment. FIG. 4 is an enlarged view of the main part of the electricity storage pack after the unfolding according to the present embodiment. In the following description, the signs L, R, U, and D in the drawings represent left, right, up and down, respectively. However, these are only directions for convenience of explanation and do not limit an installation form of the electricity storage pack in any way.

As illustrated in FIG. 1, an electricity storage pack 1 according to one embodiment is an electricity storage pack including an electricity storage device 10 and an exterior body 20.

### <Electricity Storage Device>

The electricity storage pack according to the present embodiment includes a plurality of electricity storage devices 10 that are electrically connected to each other. In FIG. 1, the electricity storage devices 10 are connected in series. However, in the present embodiment, the number, arrangement and the like of the electricity storage devices are not limited thereto. The electricity storage device 10 is a rectangular parallelepiped and also has a flat square shape. Here, the electricity storage devices 10 are arranged in a row in a left-right direction such that flat surfaces of the adjacent electricity storage devices face each other in pairs. However, the shape of the electricity storage device is not limited to this, and may be cylindrical, for example. The electricity storage device 10 houses an electrode body (not illustrated) inside and has electrode terminals (not illustrated) that are electrically connected to the electrode body and drawn out to an outside of the electricity storage devices 10. A positive terminal (not illustrated) of one of adjacent electricity storage devices 10 and a negative terminal (not illustrated) of the other electricity storage device 10 are electrically connected to each other by a metal busbar 15. Although not illustrated here, the electricity storage devices 10 are retained integrally and fixed together by a restraining band. The electricity storage devices 10 located at both ends in the right-left direction have electrode terminals 16 for external connection. The electrode terminals 16 for external connection penetrate the exterior body 20 and extend to its outside.

### < Exterior Body >

The exterior body 20 houses therein the plurality of electricity storage devices 10 in a sealed state. In FIG. 1, the exterior body 20 is a rectangular parallelepiped-shaped housing. Such an exterior body 20 is sealed with the electricity storage devices 10 housed inside. However, the shape and size of the exterior body 20 may be changed as appropriate, for example, depending on the size and number of the electricity storage devices 10 to be housed.

Here, the exterior body 20 of the present embodiment includes a main body 21, a vent 22, and an unfolding member 23. Each component is described below.

### <Main body>

The main body 21 is a box-shaped rigid member that houses therein the electricity storage devices 10. Here, an outer shape of the main body 21 of the exterior body 20 is a rectangular parallelepiped box shape. The material of the main body 21 is not particularly limited as long as it is rigid enough to protect the electricity storage device 10 from external shocks, dust, and the like. The material of the main body 21 is, for example, metal or resin. The shape and size of the main body of the exterior body are not particularly limited and can be changed as appropriate.

### <Vent>

The vent 22 is an opening provided at a bottom surface of the main body 21 of the exterior body 20. The vent 22 allows gas generated from the electricity storage device 10 to flow into the unfolding member 23 in the main body 21 of the exterior body 20. In the present embodiment, the shape, size and number of vents are not particularly limited. From the viewpoint of efficiently dispersing the gas generated from the electricity storage device 10 into the unfolding member 23, it is preferred that a plurality of vents 22 is provided. Having a larger number of vents 22 also has the advantage of allowing for a reduction in the weight of the exterior body 20. The formation of the vents 22 in a mesh configuration can prevent debris or dust from entering the unfolding member 23 in the event that the electricity storage device 10 is damaged. This can prevent an unfolding section 24 from being damaged from its inside.

### <Unfolding Member>

The unfolding member 23 is a member having a mechanism that unfolds when an internal pressure of the exterior body 20 increases to thereby increase an internal volume of the exterior body 20. As illustrated in FIGS. 1 and 2, the unfolding member 23 in the present embodiment is joined to a bottom surface side of the main body 21. The inside of the main body 21 and the inside of the unfolding member 23 communicate with each other through at least one or more vents 22. In this way, gas generated from the electricity storage device 10 is allowed to flow into the unfolding member 23. That is, the inside of the unfolding member 23 is a space for filling with the gas.

Here, the unfolding member 23 is formed by an unfolding section 24, a protection section 25, and a stopper 26. Each component is described below.

### <Unfolding Section>

The unfolding section 24 is a flexible member that connects the bottom surface of the main body 21 to a periphery of the protection section 25. The unfolding section 24 is hollow and has a square or cylindrical shape. As illustrated in FIG. 3, under normal conditions, the unfolding section 24 is stored in the protection section 25 in a state of being folded one or more times in an accordion-like manner. The unfolding section 24 is configured to be able to expand and unfold when the internal pressure increases. This can increase a volume of the exterior body 20. It is desirable that the material of the unfolding section is excellent in airtightness and flexibility and has adequate heat resistance and pressure resistance. Specifically, examples of the material of the unfolding section include polyamide, polyester, polyolefin, polyacetal, polysulfone, polyphenylene sulfide, polyether ether ketone, polyimide, polyetherimide, polyparaphenylene benzbisoxazole, vinylon, acrylic, cellulose, and the like, and this material may contain fluorine, inorganic fillers, and the like. Of these, from the viewpoint of strength, polyester is preferable, and polyamide is more preferable.

As illustrated in FIGS. 3 and 4, the unfolding section 24 is fixed to the bottom surface of the main body 21 of the exterior body 20 by a fixing member 27 such as a rivet. Here, furthermore, a joint between the unfolding section 24 and the protection section 25 is also fixed by the fixing member 27 in the same manner. Joints among the main body, the unfolding section, and the protection section may be joined together by an adhesive.

### <Protective Section>

The protection section 25 is a plate-shaped rigid member facing the bottom surface of the main body 21. The protection section 25 covers the unfolding section 24 above and protects the flexible unfolding section 24. In FIG. 3, the protection section 25 serves to store the unfolding section 24 so as to protect it from external shocks and dust under the normal conditions. Here, moreover, an outer peripheral edge of the protection section 25 has a peripheral wall 25a protruding toward the bottom surface of the main body 21 of the exterior body 20. In this way, a space surrounded by the protection section 25 and the bottom surface of the main body 21 can be created. This allows the unfolding section 24 in its folded state to be housed in the space. The material of the protection section is metal or resin, as is the main body 21 of the exterior body 20.

### <Stopper>

The stopper 26 connects the main body 21 and the protection section 25 and restricts unfolding of the unfolding member 23. The stopper 26 illustrated in FIGS. 3 and 4 is a metal or resin rivet or the like. In FIG. 3, the stopper 26 is a rivet composed of a rod-shaped body and a head having a diameter larger than that of the body. Here, the stopper 26 connects the main body 21 and the protection section 25 such that they are not separated from each other. As illustrated in FIG. 4, the stopper 26 breaks when the internal pressure of the exterior body 20 exceeds a predetermined value. This releases restriction on the unfolding of the unfolding member 23. However, the stopper 26 is not limited to this and can also be one selected from removable types, such as button snaps, buckles, and hook-and-loop fasteners. The type, material, and number of stoppers can also be changed so that the restriction of the stopper 26 is released when the pressure exceeds a predetermined value. For the rivet, it may be adjusted to break easily by notching the body or the like. The stopper is not limited to the rivet with the above configuration, but can also be the use of an adhesive or the other that peels off when a predetermined stress is applied.

### <Unfolding Operation>

As illustrated in FIG. 3, under the normal conditions, i.e., when the internal pressure of the exterior body 20 is below the predetermined value, the stopper 26 fixes the main body 21 of the exterior body 20 and the protection section 25 of the unfolding member 23. Thus, the unfolding of the unfolding section 24 can be restricted regardless of an increase in its internal pressure. The "predetermined value" as used herein is about 0.035 MPa as an example. By setting the pressure at which the unfolding section 24 unfolds to the above pressure, the restriction of the stopper is prevented from being accidentally released by vibration or the like under normal conditions. The "predetermined value" can be increased or decreased as appropriate, taking into consideration the strength of the exterior body 20 and its volume under the normal conditions.

In the electricity storage pack 1 according to the present embodiment, when unexpected gas generated from the electricity storage device 10 instantaneously increases the internal pressure of the main body 21 of the exterior body 20, the internal pressure of the unfolding member 23 also increases through the vent 22. Next, the protection section 25 is pushed outward from the exterior body 20, thus applying a tensile force to the stopper 26. When the pressure inside the exterior body 20 exceeds the above predetermined value, the stopper 26 breaks, and the restriction of the unfolding member 23 is released. Thus, the unfolding section 24 unfolds, causing an instantaneous increase in the internal volume of the exterior body 20, which temporarily reduces the internal pressure of the exterior body 20, enabling prevention of damage to the exterior body 20. According to the electricity storage pack 1 with this configuration, there is no need to secure a volume for filling gas in the exterior body 20 in advance. Therefore, the electricity storage pack 1 offers the advantage of allowing other spaces to be used more efficiently in an apparatus with the electricity storage pack 1 mounted. It is noted that the volume of the exterior body 20 after the unfolding of the unfolding member 23 is eventually preferably twice or more times the volume of the exterior body 20 before the unfolding. This can mitigate the instantaneous increase in pressure and reduce the internal pressure before the exterior body 20 is damaged.

### <Other Embodiments>

Although the preferred embodiments of the present disclosure have been described above with reference to the drawings, this description is not intended to be limiting, and various modifications are obviously possible.

### <Installation of Sensor>

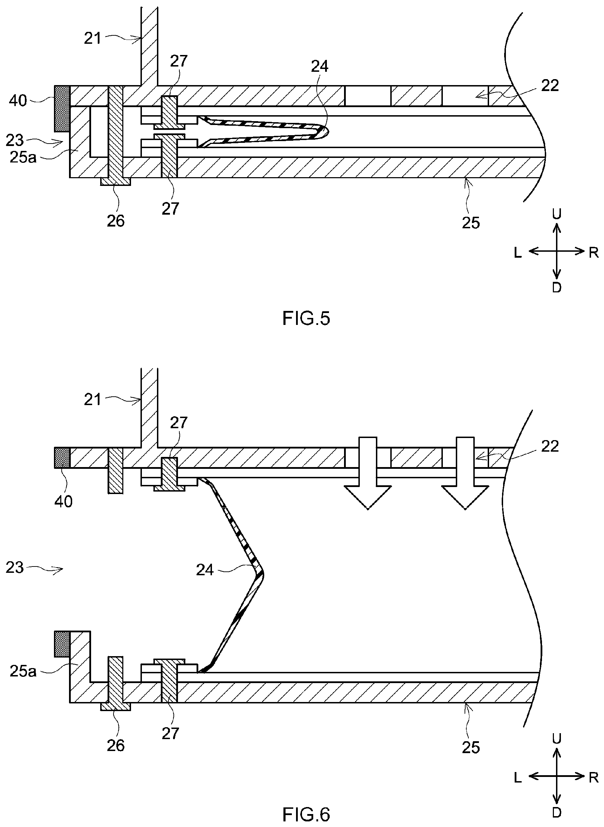

The electricity storage pack of another embodiment disclosed herein includes a sensor 40 configured to detect that the unfolding member 23 has unfolded. As illustrated in FIG. 5, the sensor is attached across the protection section 25 of the unfolding member 23 (peripheral wall 25a in FIG. 5) and the main body 21 of the exterior body 20 under normal conditions. As illustrated in FIG. 6, when the internal pressure of the exterior body 20 exceeds the predetermined value, the stopper 26 breaks, causing the unfolding member 23 to unfold. At this time, the sensor 40 is brought into a noncontact state and can detect that the unfolding member 23 is unfolding. A detection means in the sensor 40 is not particularly limited, and in addition to a contact sensor described above, a mechanical or electrical detection means can be adapted as appropriate.

### <Mounting on Vehicle>

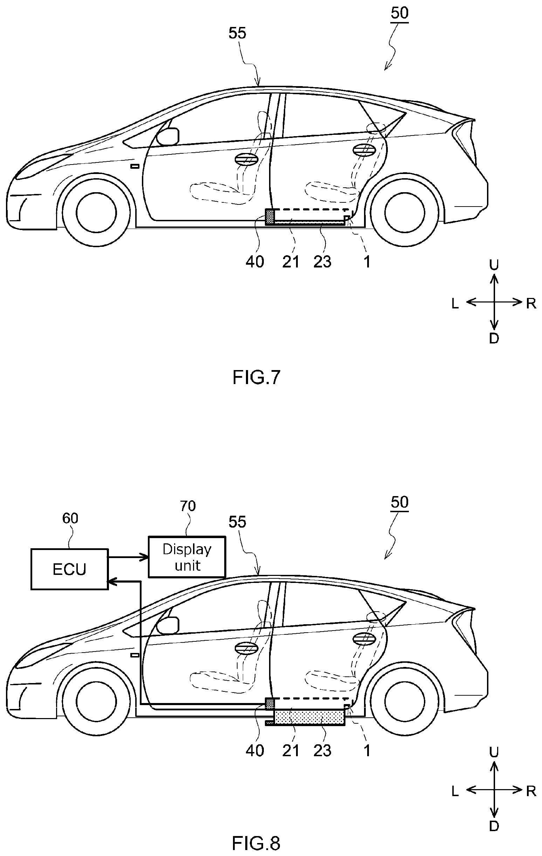

In one preferred embodiment of the electricity storage pack disclosed herein, the electricity storage pack 1 is mounted on an electric vehicle 50 as a motor drive source. As illustrated in FIGS. 7 and 8, the electricity storage pack 1 is installed under a floor of a vehicle body 55, and the unfolding member 23 is fixed so as to expand toward the bottom surface side of the vehicle body. However, this does not limit an installation form of the electricity storage pack 1 in any way, and does not limit the present disclosure in any way. The vehicle is not limited to a specific type, but examples of the vehicle may include Plug-in Hybrid Electric Vehicles (PHEVs), Hybrid Electric Vehicles (HEVs), Battery Electric Vehicles (BEVs), and the like.

In the above embodiments, when gas is generated from the electricity storage device 10 due to its short circuit or the like, the internal pressure of the electricity storage pack 1 increases. When the internal pressure exceeds the predetermined value, the unfolding member 23 unfolds between the floor of the vehicle body 55 and a ground (not illustrated). This can secure a space required for the unfolding member 23 to unfold, without invading a ride space.

In the embodiment disclosed herein, an electronic control unit (ECU) 60 and a display unit 70 may be used in the electric vehicle 50. The ECU 60 is preferably connected to the sensor 40 (see FIG. 4) described above.

The ECU 60 performs a predetermined function, for example, according to a predetermined program. Here, the ECU 60 receives a signal from the sensor 40, which detects a state in which the unfolding member 23 of the electricity storage pack 1 has unfolded. The display unit 70 is controlled by the ECU 60 and provides notification that the unfolding member 23 has unfolded. This allows an occupant to recognize that an abnormality has occurred in the battery pack and to promptly ensure safety.

### <Joint Position of Unfolding Member>

In the above embodiment, the unfolding member 23 is joined to the bottom surface side of the exterior body 20. However, the unfolding member is not limited to this and may be joined to a side surface or top surface of the exterior body 20 via a vent. It is preferable to provide a plurality of unfolding members 23 and to unfold them in stages. Thus, an instantaneous increase in internal pressure can be mitigated more securely. This is particularly useful in the event of a chain of short circuits occurring in the electricity storage device.

### <Presence or Absence of Stopper>

As illustrated in FIGS. 3 to 6, in the above embodiments, the unfolding member 23 is provided with the stopper 26 that restricts its unfolding. However, the restriction on the unfolding of the unfolding member 23 is not limited to this, and can be performed by any other means without using the stopper. For example, in a case where the unfolding member 23 is provided on the top surface of the exterior body 20, the unfolding of the unfolding member 23 can be restricted by a weight of the protection section 25 itself. By adjusting the material and thickness of the unfolding section 24, the unfolding of the unfolding member 23 is suppressed under normal conditions, and an internal volume of the exterior body 20 can also be increased due to deformation and expansion of the unfolding section 24 when the internal pressure increases.

### <State of Unfolding section>

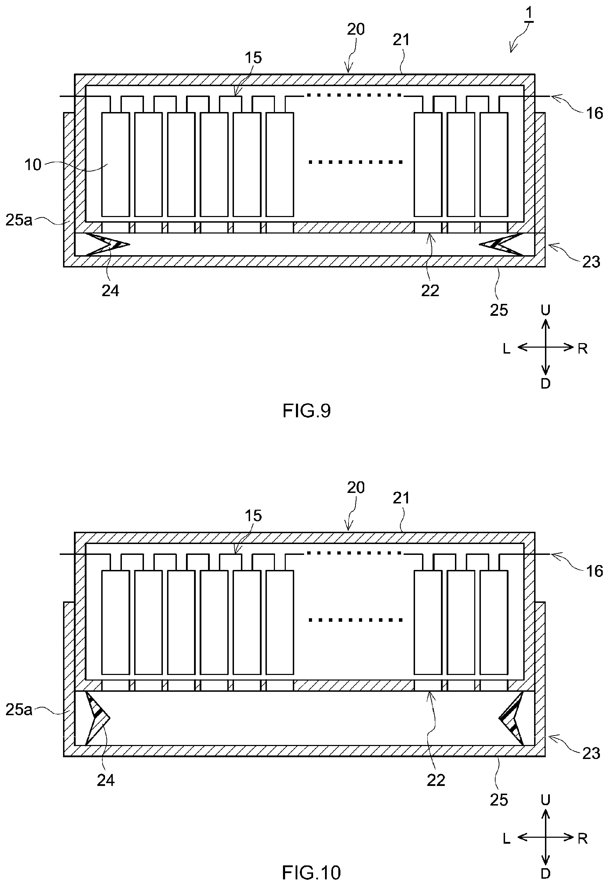

In the above embodiment, the unfolding section 24 is stored in the protection section 25 in a state of being folded one or more times in the accordion-like manner under normal conditions. However, the unfolding section 24 is not limited to this form, and it is possible to carelessly tuck the unfolding section 24 in a gap between the protection section 25 and the exterior body 20. In the unfolded state, a gap is formed between the exterior body 20 and a part of the protection section 25, causing the unfolding section 24 to be partially exposed (see FIG. 4). However, the unfolding section 24 is not limited to this, and the peripheral wall 25a can be extended upward in a state before unfolding. As illustrated in FIG. 9, the peripheral wall 25a surrounds the exterior body 20 along a sidewall of the main body 21 of the exterior body 20. In this way, as illustrated in FIG. 10, all of the unfolding sections 24 are covered with the protection section 25 (peripheral wall 25a in FIG. 10) even after the unfolding, so that the unfolding section 24 can be more securely protected.

## Claims

1. An electricity storage pack (1) comprising a plurality of electricity storage devices (10) electrically connected to each other; and an exterior body (20) housing therein the plurality of electricity storage devices (10) in a sealed state, wherein
the exterior body (20) includes an unfolding member (23) configured to unfold when an internal pressure of the exterior body (20) increases, thereby increasing an internal volume of the exterior body (20),
wherein
the exterior body (20) comprises
a main body (21) being a box-shaped rigid member that houses the electricity storage devices (10); **characterized in that**
a vent (22) is provided at a bottom surface of the main body (21);
and **in that**
the unfolding member (23) comprises:
a protection section (25) being a plate-shaped rigid member facing the bottom surface of the main body (21); and
an unfolding section (24) being a flexible member connecting the bottom surface of the main body (21) and a periphery of the protection section (25) so as to seal the exterior body (20).

2. The electricity storage pack (1) according to claim 1, wherein
a peripheral wall (25a) protruding toward the bottom surface of the main body (21) is provided at an outer peripheral edge of the protection section (25), and
the unfolding section (24) is housed in a space enclosed between the protection section (25) and the bottom surface of the main body (21) in a folded state.

3. The electricity storage pack (1) according to claim 1 or 2, wherein
the exterior body (20) includes a stopper (26) restricting unfolding of the unfolding member (23), and
the stopper (26) connects the main body (21) and the protection section (25) and releases connection between the main body (21) and the protection section (25) when an internal pressure of the exterior body (20) exceeds a predetermined value.

4. The electricity storage pack (1) according to any one of claims 1 to 3, further comprising: a sensor (40) configured to detect that the unfolding member (23) has unfolded.

5. A vehicle (50) on which the electricity storage pack (1) according to any one of claims 1 to 4 is mounted, the electricity storage pack being mounted such that the unfolding member (23) unfolds toward a bottom surface side of the vehicle (50).

## Patentansprüche

1. Stromspeicherpaket (1), das eine Vielzahl von Stromspeichervorrichtungen (10) aufweist, die elektrisch miteinander verbunden sind; und einen Außenkörper (20), in dem die Vielzahl von Stromspeichervorrichtungen (10) in einem abgedichteten Zustand untergebracht ist, wobei
der Außenkörper (20) ein Entfaltungselement (23) umfasst, das so konfiguriert ist, dass es sich entfaltet, wenn ein Innendruck des Außenkörpers (20) ansteigt, wodurch das Innenvolumen des Außenkörpers (20) vergrößert wird,
wobei der Außenkörper (20) aufweist:
einen Hauptkörper (21), der ein kastenförmiges starres Element ist, in dem die Stromspeichervorrichtungen (10) untergebracht sind;
**dadurch gekennzeichnet, dass**
eine Entlüftungsöffnung (22) an einer unteren Oberfläche des Hauptkörpers (21) vorgesehen ist;
und dadurch, dass
das Entfaltungselement (23) aufweist:
einen Schutzabschnitt (25), der ein plattenförmiges starres Element ist, das der unteren Oberfläche des Hauptkörpers (21) zugewandt ist; und
einen Entfaltungsabschnitt (24), der ein flexibles Element ist, das die untere Oberfläche des Hauptkörpers (21) und einen Umfang des Schutzabschnitts (25) verbindet, um den Außenkörper (20) abzudichten.

2. Stromspeicherpaket (1) nach Anspruch 1, wobei
eine zur unteren Oberfläche des Hauptkörpers (21) hin vorstehende Umfangswand (25a) an einer Außenumfangskante des Schutzabschnitts (25) vorgesehen ist, und
der Entfaltungsabschnitt (24) in einem Raum untergebracht ist, der zwischen dem Schutzabschnitt (25) und der unteren Oberfläche des Hauptkörpers (21) in einem gefalteten Zustand eingeschlossen ist.

3. Stromspeicherpaket (1) nach Anspruch 1 oder 2, wobei
der Außenkörper (20) einen Anschlag (26) aufweist, der das Entfalten des Entfaltungselements (23) begrenzt, und
der Anschlag (26) den Hauptkörper (21) und den Schutzabschnitt (25) verbindet und die Verbindung zwischen dem Hauptkörper (21) und dem Schutzabschnitt (25) löst, wenn ein Innendruck des Außenkörpers (20) einen vorbestimmten Wert überschreitet.

4. Stromspeicherpaket (1) nach einem der Ansprüche 1 bis 3, ferner aufweisend: einen Sensor (40), der so konfiguriert ist, dass er erkennt, dass sich das Entfaltungselement (23) entfaltet hat.

5. Fahrzeug (50), an dem das Stromspeicherpaket (1) nach einem der Ansprüche 1 bis 4 angebracht ist, wobei das Stromspeicherpaket so angebracht ist, dass sich das Entfaltungselement (23) in Richtung einer unteren Oberfläche des Fahrzeugs (50) entfaltet.

## Revendications

1. Un pack de stockage d'électricité (1) comprenant une pluralité de dispositifs de stockage d'électricité (10) connectés électriquement les uns aux autres ; et un corps extérieur (20) logeant en son sein la pluralité de dispositifs de stockage d'électricité (10) dans un état scellé, dans lequel
le corps extérieur (20) comprend un élément déployable (23) configuré pour se déployer lorsque la pression interne du corps extérieur (20) augmente, augmentant ainsi le volume interne du corps extérieur (20), dans lequel
le corps extérieur (20) comprend
un corps principal (21) qui est un élément rigide en forme de boîte qui loge les dispositifs de stockage d'électricité (10) ; **caractérisé en ce que**
un évent (22) est prévu au niveau d'une surface inférieure du corps principal (21) ;
et **en ce que**
l'élément déployable (23) comprend :
une section de protection (25) qui est un élément rigide en forme de plaque faisant face à la surface inférieure du corps principal (21) ; et
une section dépliable (24) qui est un élément flexible reliant la surface inférieure du corps principal (21) et une périphérie de la section de protection (25) de manière à sceller le corps extérieur (20).

2. Le pack de stockage d'électricité (1) selon la revendication 1, dans lequel
une paroi périphérique (25a) faisant saillie vers la surface inférieure du corps principal (21) est prévue au niveau d'un bord périphérique extérieur de la section de protection (25), et
la section dépliable (24) est logée dans un espace délimité entre la section de protection (25) et la surface inférieure du corps principal (21) à l'état plié.

3. Le pack de stockage d'électricité (1) selon la revendication 1 ou 2, dans lequel
le corps extérieur (20) comprend un dispositif d'arrêt (26) limitant le déploiement de l'élément déployable (23), et
le dispositif d'arrêt (26) relie le corps principal (21) et la section de protection (25) et libère la connexion entre le corps principal (21) et la section de protection (25) lorsque la pression interne du corps extérieur (20) dépasse une valeur prédéterminée.

4. Le pack de stockage d'électricité (1) selon l'une des revendications 1 à 3, comprenant en outre : un capteur (40) configuré pour détecter que l'élément déployable (23) s'est déployé.

5. Un véhicule (50) sur lequel est monté le pack de stockage d'électricité (1) selon l'une des revendications 1 à 4, le pack de stockage d'électricité étant monté de telle sorte que l'élément déployable (23) se déploie vers le côté de la surface inférieure du véhicule (50).
